# EUROPÄISCHE PATENTSCHRIFT

(11) **EP 4 265 480 B1**
(45) Veröffentlichungstag und Bekanntmachung des Hinweises auf die Patenterteilung: **07.05.2025**
(21) Anmeldenummer: 23159783.2
(22) Anmeldetag: 02.03.2023
(51) Int. Cl.: B60R 5/04, B60R 13/01

(54) **LADERAUMABDECKUNGSANORDNUNG FÜR EIN FAHRZEUG, LADERAUM EINES FAHRZEUGS UND EIN FAHRZEUG**
A LUGGAGE COMPARTMENT COVER ASSEMBLY FOR A VEHICLE, LUGGAGE COMPARTMENT OF A VEHICLE AND A VEHICLE
ENSEMBLE COUVERCLE DE COMPARTIMENT À BAGAGES POUR UN VÉHICULE, COMPARTIMENT À BAGAGES D'UN VÉHICULE ET VÉHICULE

(30) Priorität: 21.04.2022 DE 102022203897; 13.07.2022 DE 102022207167
(43) Veröffentlichungstag der Anmeldung: 25.10.2023
(73) Patentinhaber: VOLKSWAGEN AG, 38440 Wolfsburg (DE)
(72) Erfinder: Koch, Christian, 38116 Braunschweig (DE)

(56) Entgegenhaltungen:
- EP-A1- 2 360 057
- DE-A1- 102009 010 967
- DE-A1- 102010 006 109
- DE-A1- 102017 205 533
- DE-U1- 202006 007 784
- DE-U1- 202017 002 667

## Beschreibung

Die Erfindung betrifft eine Laderaumabdeckungsanordnung für ein Fahrzeug nach dem Oberbegriff des Anspruches 1, einen Laderaum eines Fahrzeugs nach Anspruch 10 und ein Fahrzeug nach Anspruch 11. Die Erfindung liegt somit auf dem Gebiet der Fahrzeugtechnik und insbesondere auf dem Gebiet der Innenausstattung für Fahrzeuge.

Ein Ladeboden dient als Raumteiler zum Verdecken eines zusätzlichen, für gewöhnlich im Kofferraum eines Fahrzeugs angeordneten Stauraums. In diesem zusätzlichen Stauraum können beispielsweise eine Ersatzradmulde mit Ersatzrad und/oder Werkzeug enthalten sein. Um an diese Gegenstände zu gelangen, kann der Stauraum durch einen am Ladeboden angeordneten Handgriff geöffnet werden. Der Handgriff ist aus Gründen einer guten Erreichbarkeit in der Regel in der Nähe des Hecks oder angrenzend an das Heck des Fahrzeugs angeordnet. Durch Ziehen des Griffs kann der Ladeboden in Richtung der Fahrzeugfront geschwenkt und damit geöffnet werden. Der Ladeboden kann anschließend in der geöffneten Position fixiert werden, um bspw. die Herausnahme des Ersatzrads mit beiden Händen zu ermöglichen.

Die Fixierung des Ladebodens in seiner geöffneten Position kann auf verschiedene Arten erfolgen. Bspw. ist aus der DE 10 2017 205 533 A1 bekannt, ein Halteelement zum Halten eines Ladebodens zu verwenden. Das Halteelement ist an der Seitenwand eines Kofferraums des Fahrzeugs angeordnet. Aus der DE 20 2017 002 667 U1 ist eine gattungsgemäße Kofferraumanordnung für ein Fahrzeug bekannt. Aus der EP 2 360 057 A1 ist eine Anordnung eines Laderaumbodens bekannt. Aus der DE 20 2006 007 784 U1 ist ein höhenverstellbarer Ladeboden für ein Kraftfahrzeug bekannt. Aus der DE 10 2009 010 967 A1 ist ein Kraftfahrzeug mit einer Laderaumabdeckung bekannt. Aus der DE 10 2010 006 109 A1 ist ein Kraftfahrzeug mit einem aufklappbaren Laderaumboden bekannt. Aus der DE 10 2017 205 533 A1 ist eine Haltevorrichtung für einen Ladeboden in einem Kraftfahrzeug bekannt.

Es ist die Aufgabe der vorliegenden Erfindung, weitere Möglichkeiten zum Fixieren eines Ladebodens in seiner geöffneten Position bereitzustellen. Eine weitere Aufgabe der vorliegenden Erfindung besteht gegebenenfalls darin, bereits vorhandene Elemente eines Fahrzeugs einer umfangreicheren Nutzung zuzuführen.

Diese Aufgabe ist durch die Merkmale des Anspruches 1 sowie der Ansprüche 10 oder 11 gelöst. Vorteilhafte Ausgestaltungen sind in den abhängigen Ansprüchen und in der Beschreibung angegeben.

In einem ersten Aspekt betrifft die Erfindung eine Laderaumabdeckungsanordnung für ein Fahrzeug. Die Laderaumabdeckungsanordnung weist eine Laderaumabdeckung mit einem laderaumseitig angeordneten Halteelement zur Befestigung eines Ladebodens des Fahrzeugs auf. Die Laderaumabdeckung ist dazu ausgelegt, mittels des Halteelements den Ladeboden an der Laderaumabdeckung lösbar zu befestigen, um den Ladeboden in einer geöffneten Position zu halten.

In einem weiteren Aspekt betrifft die Erfindung einen Laderaum eines Fahrzeugs mit einer

solchen Laderaumabdeckungsanordnung, wobei die Laderaumabdeckung an einer Oberseite des Laderaums angeordnet ist und einem an einem Boden des Laderaums angeordneten Ladeboden, wobei eine erste Kante des Ladebodens um eine an dem Boden angeordnete Drehachse drehbar gelagert ist und eine zweite Kante des Ladebodens in Richtung der Laderaumabdeckungsanordnung schwenkbar ist, um den Ladeboden in eine geöffnete Position zu verbringen, wobei die Laderaumabdeckung ein laderaumseitig angeordnetes Halteelement für den Ladeboden des Fahrzeugs aufweist, und wobei die Laderaumabdeckung dazu ausgelegt ist, mittels des Halteelements den Ladeboden an der Laderaumabdeckung lösbar zu befestigen, um den Ladeboden in der geöffneten Position zu halten.

In noch einem weiteren Aspekt betrifft die Erfindung ein Fahrzeug, insbesondere ein Kraftfahrzeug, mit einer Laderaumabdeckungsanordnung oder einem Laderaum.

Eine Laderaumabdeckung betrifft optional eine Abdeckung eines für gewöhnlich am Heck eines Fahrzeugs angeordneten Stauraums, insbesondere Kofferraums. Die Abdeckung ist in der Regel derartig ausgebildet, dass der Inhalt des Stauraums durch die Heckscheibe des Fahrzeugs nicht zu erkennen ist. Hierfür kann die Abdeckung zum einen aus einem undurchsichtigen Material ausgeführt sein, zum anderen kann die Abdeckung den Stauraum im Wesentlichen vollständig bedecken. Die Laderaumabdeckung kann beispielsweise außerdem als Ablage für Gegenstände fungieren und/oder im Stauraum befindliche Gegenstände, bspw. bei einem Bremsvorgang, sichern.

Die Laderaumabdeckung ist durch ein Flächengebilde realisiert. Das Flächengebilde kann dabei ein Gewebe, bspw. ein Polymergewebe, sein, welches auf einer Wickelwelle auf- und abrollbar angeordnet ist. Alternativ kann das Flächengebilde eine Lamellenstruktur aus einander angrenzenden Lamellen aus einem festen Material, bspw. Polymerplatten, sein, die bspw. in Art einer Ziehharmonikafaltung auseinandergezogen und zusammengeschoben werden können. Das Flächengebilde kann bspw. im Fall eines auf einer Wickelwelle aufgerollten Gewebes oder einander angrenzenden Lamellen, die in Art einer Ziehharmonikafaltung auseinandergezogen und zusammengeschoben werden können, auf eine im Wesentlichen horizontale Funktionsposition ausgezogen werden, wobei der Laderaum in der vollständig ausgezogenen Position im Wesentlichen vollständig überdeckt wird. Die im Wesentlichen horizontale Funktionsposition ist dabei im Wesentlichen parallel zu Boden und Deckenhimmel des Fahrzeugs.

Das Flächengebilde ist an einer Seite durch eine Konturplatte begrenzt. Die andere Seite des Flächengebildes ist dabei für gewöhnlich an dem Fahrzeug, insbesondere an der Verkleidung oder an anderen Teilen der Innenausstattung, befestigt. Durch händisches Betätigen der Konturplatte kann das Flächengebilde in die im Wesentlichen horizontale Funktionsposition ausgezogen werden. Die Konturplatte kann dabei als Auszugsleiste ausgebildet sein bzw. als solche fungieren. Kantenbereiche der Konturplatte und/oder des Flächengebildes sind dabei in der Regel in mindestens einer Schiene aufgenommen. Die Schiene kann dabei einen Rastpunkt umfassen, der ein Einrasten der Laderaumabdeckung daran ermöglicht. Insbesondere kann der Rastpunkt eine Stellung der Laderaumabdeckung, bspw. haptisch, kennzeichnen, an der das Halteelement den Ladeboden in seiner offenen Position hält.

Ein Halteelement kann optional durch eine laderaumseitig angeordnete Oberfläche der Konturplatte und/oder ein Fixierungselement gebildet sein. Das Halteelement ist unterseitig, d.h. an der Unterseite, der Laderaumabdeckung, insbesondere der Konturplatte, angeordnet und ermöglicht ein Halten und Lösen eines Ladebodens in seiner offenen Position. Mehrere derartige Halteelemente können vorliegen. Vorzugsweise sind das bzw. die Halteelemente über der Kantenmitte des Ladebodens, vorzugsweise auch einer Seitenmitte der Laderaumabdeckung, angeordnet. Dies hat den Vorteil, dass das, und ggf. die, Halteelemente lediglich mit einer Hand gelöst werden können.

Der Laderaum eines Fahrzeugs kann vorzugsweise einen Laderaum eines Personenkraftfahrzeugs darstellen. Dieser wird üblicherweise von dem Dach, dem Boden, den Seitenwänden, Heck und Rückenlehnenanordnung einer Fondsitzbank, bzw. von dort vorliegenden Verkleidungselementen, bspw. dem Dachhimmel, begrenzt.

Richtungsangaben, wie "im Wesentlichen horizontal" bzw. "im Wesentlichen parallel" betreffen die jeweilige Richtung mit einer Abweichung von ±5° oder weniger, vorzugsweise ±1° oder weniger, mehr bevorzugt die genannte Richtung. Die Angabe "im Wesentlichen vollständig überdeckt" betrifft eine Überdeckung von mindestens 90%, vorzugsweise 95%, mehr bevorzugt eine vollständige Überdeckung. Angaben, wie "oben" oder "unten" betreffen die Lage des jeweiligen Elements in einem Fahrzeug im ordnungsgemäß in das Fahrzeug eingebauten Zustand. Bspw. ist der Formhimmel oder Dachhimmel oben in dem Fahrzeug angeordnet.

Die Erfindung bietet den Vorteil, dass ein Ladeboden in seiner geöffneten Position arretiert bzw. fixiert werden kann, wobei die Raumausnutzung in dem Laderaum durch bspw. und insbesondere eines oder mehrere an Seiten des Laderaums angeordnete Halteelemente nicht beeinträchtigt wird. Weiterhin kann der Ladeboden an einer beliebigen Stelle des Bodens des Laderaums und nicht notwendigerweise in der Nähe einer Seitenwand des Laderaums angeordnet werden. Das Halteelement kann dabei einfach und widerstandsfähig ausgeführt sein.

Optional umfasst die Laderaumabdeckungsanordnung ein durch eine Konturplatte begrenztes Flächengebilde, wobei das Halteelement durch eine laderaumseitig angeordnete Oberfläche der Konturplatte oder des Flächengebildes gebildet ist und/oder als Fixierungselement ausgestaltet ist. Die Konturplatte ist dabei angrenzend an ein Ende des Flächengebildes angeordnet und kann dessen händische Bewegung, bspw. Ziehen, in Richtung des Hecks des Fahrzeugs ermöglichen, um den Laderaum im Wesentlichen vollständig zu bedecken. Alternativ oder zusätzlich kann das Flächengebilde auch mittels eines Elektromotors bspw. von einer Wickelwelle abgerollt oder anderweitig entfaltet bzw. aufgespannt werden, um eine Abdeckung für den Laderaum zu bilden. Das Halteelement ist laderaumseitig bzw. an der Unterseite der Laderaumabdeckung, bspw. an dem Konturelement und/oder dem Flächengebilde, angeordnet. Das Halteelement kann durch eine Oberflächengestaltung des Konturelements, und/oder ggf. des Flächengebildes, bereitgestellt sein, d.h. durch die Oberfläche des Konturelements, und/oder ggf. des Flächengebildes, definiert werden. Alternativ oder zusätzlich ist das Halteelement als körperliches Fixierungselement an der Unterseite des Konturelements, und/oder ggf. des Flächengebildes, ausgebildet.

Optional ist das Flächengebilde auf einer Wickelwelle auf- und abrollbar angeordnet. Die Wickelwelle kann dabei in ein Gehäuse aufgenommen sein. Das Auf- und Abrollen des Flächengebildes kann optional elektrisch und/oder händisch erfolgen. Das Flächengebilde liegt vorzugsweise nach dem Abrollen derart gespannt vor, dass es als Ablage für Gegenstände verwendet werden kann. Weiter bevorzugt ist das Flächengebilde blickdicht ausgebildet. Dadurch kann ein Blickschutz der im Laderaum befindlichen Gegenstände ermöglicht werden. Außerdem kann die Sicherheit der im Fahrzeug befindlichen Insassen erhöht werden. Erfindungsgemäß ist die Laderaumabdeckungsanordnung derart ausgebildet, dass zur Befestigung des Ladebodens mittels des Halteelements der Ladeboden, insbesondere in geöffnetem und befestigtem Zustand, an die laderaumseitig angeordnete Oberfläche der Konturplatte formschlüssig anschlägt. Insbesondere schlägt die zweite Kante des Ladebodens, die gegenüberliegend der ersten Kante des Ladebodens ausgebildet ist, an die laderaumseitig angeordnete Oberfläche der Konturplatte formschlüssig an. Der formschlüssige Anschlag des Ladenbodens, insbesondere der zweiten Kante des Ladebodens, kann insbesondere mit der Konturplatte aber auch mit dem Flächengebilde als solchem, insbesondere mit einem Flächengebilde aus einem elastischen Material, hergestellt werden. Der formschlüssige Anschlag kann dadurch ein Halteelement für den Ladeboden bereitstellen, ohne dass ein überstehendes Halteelement, insbesondere Fixierungselements, bspw. in Form eines Stabs, etc., angebracht werden muss. Ein weiterer Vorteil besteht darin, dass die Befestigung des Ladebodens in der geöffneten Position an einer beliebigen Stelle der Laderaumabdeckung erfolgen kann.

Erfindungsgemäss ist die Konturplatte an der Laderaumabdeckung beweglich gelagert. Bspw. kann die Konturplatte über ein Drehgelenk an dem Flächengebilde befestigt sein. Dadurch wird das händische Betätigen der Laderaumabdeckung, insbesondere das Öffnen und Schließen, erleichtert.

Optional ist die Konturplatte entgegen einer durch ein erstes federartiges Element vermittelten Kraft in eine dem Laderaum entgegengesetzte Richtung bewegbar. Optional handelt es sich bei dem ersten federartigen Element um eine erste Feder. Das erste federartige Element kann hierfür zwischen dem Flächengebilde und der Konturplatte vorliegen, wobei die Konturplatte an der Laderaumabdeckung beweglich gelagert ist. Dadurch kann der Andruck der Konturplatte an den Ladeboden weiter erhöht werden, wodurch eine sichere Befestigung des Ladebodens an der Konturplatte, und mithin an der Laderaumabdeckung, ermöglicht wird, ohne dass dabei die Laderaumabdeckung durch Anbringung eines unterhalb davon angeordneten Elements und damit auch die Geometrie des Laderaums modifiziert werden muss.

Optional ist die laderaumseitig angeordnete Oberfläche der Konturplatte zumindest abschnittsweise als eine erste Gleitfläche ausgebildet. Die erste Gleitfläche ist dabei zum Gleiten entlang des Ladebodens, insbesondere der zweiten Kante des Ladebodens, ausgestaltet und ggf. auch geformt. Bspw. kann die erste Gleitfläche aus einem, vorzugsweise glatten, Teppichwerkstoff oder einem Kunststoffmaterial ausgebildet sein. Die Abmessungen der ersten Gleitfläche sowie deren Form können anhand der des Ladebodens, insbesondere dessen zweiter Kante, ermittelt werden. Durch die Ausbildung der Konturfläche zumindest abschnittsweise als erste Gleitfläche kann die Bewegbarkeit des Ladebodens bzgl. der Laderaumabdeckung verbessert werden. Gleichzeitig kann ein Fixieren des Ladebodens in seiner offenen Position an der Konturplatte und damit der Laderaumabdeckung erreicht werden.

Optional ist das Fixierungselement an der Laderaumabdeckung, vorzugsweise an der Konturplatte, schwenkbar gelagert. Dies hat den Vorteil, dass eine Fixierung des Ladebodens in seiner offenen Position lediglich über das Fixierungselement erfolgen kann. Hierdurch kann eine Notwendigkeit für eine genaue Anpassung der Maße des Ladebodens und der Laderaumabdeckung aneinander vermieden werden. Beispielsweise und insbesondere kann ein Abstand von der ersten Kante und der zweiten Kante des Ladebodens kleiner als die maximale Höhe des Laderaums, die durch den Abstand der Laderaumabdeckung und des Bodens festgelegt ist, ausfallen, unter der Maßgabe, dass das Fixierungselement ausreichend weit in den Laderaum hineinragt, d.h. dass das Fixierungselement die freie Beweglichkeit der Laderaumabdeckung einschränkt.

Optional ist das Fixierungselement entgegen einer durch ein zweites federartiges Element vermittelten Kraft in Richtung der Laderaumabdeckungsanordnung beweglich. Optional handelt es sich bei dem zweiten federartigen Element um eine zweite Feder. Hierzu können optional zwischen einem an der Laderaumabdeckung schwenkbar angebrachten Fixierungselement und der Laderaumabdeckung zwei zweite federartige Elemente, optional zwei zweite Federn, derart angebracht werden, dass die Bewegung des Ladebodens in beide Richtungen durch eine von dem zweiten federartigen Element ausgeübte Kraft behindert wird. Ein weiterer Vorteil besteht in einer höheren Stabilität des Fixierungselements.

Optional ist das Fixierungselement aus einem flexiblen Material hergestellt. Dabei kann auf die Verwendung eines zweiten federartigen Elements verzichtet werden.

Optional ist die zweite Kante des Ladebodens als zweite Gleitfläche ausgebildet, die mit einer ersten Gleitfläche in lösbaren Eingriff gebracht werden kann, wobei die erste Gleitfläche durch die laderaumseitig angeordnete Oberfläche der Konturplatte gebildet wird. Die zweite Gleitfläche ist dabei zum Gleiten entlang der ersten Gleitfläche ausgestaltet und ggf. entsprechend geformt. Bspw. kann die zweite Gleitfläche aus einem, vorzugsweise glatten, Teppichwerkstoff oder Kunststoffmaterial ausgebildet sein. Die Abmessungen der zweiten Gleitfläche sowie deren Form können anhand der Abmessungen der ersten Gleitfläche sowie der Abmessungen des Laderaums und des Ladebodens ermittelt werden. Dadurch kann die Bewegbarkeit des Ladebodens bzgl. der Laderaumabdeckung weiter verbessert werden, wobei gleichzeitig ein Fixieren des Ladebodens in seiner offenen Position an der Konturplatte und damit der Laderaumabdeckung erreicht werden kann.

Ein Fahrzeug kann dabei beispielsweise in Form eines Landfahrzeugs, Luftfahrzeugs oder Wasserfahrzeugs ausgebildet sein. Ein Landfahrzeug kann beispielsweise als ein Straßenfahrzeug oder als ein schienengebundenes Fahrzeug ausgebildet sein. Insbesondere kann ein Fahrzeug als ein Kraftfahrzeug vorliegen, wie etwa als Personenkraftwagen, Lastkraftwagen oder Autobus. Die Laderaumabdeckungsanordnung und der Laderaum sind dabei insbesondere im Innenraum des Fahrzeugs, vorzugsweise und optional zwischen einer Rückenlehnenanordnung einer Fondsitzbank und einem Heck eines Fahrzeugs, angeordnet.

Die oben genannten und im Folgenden erläuterten Merkmale und Ausführungsformen sind dabei nicht nur als in den jeweils explizit genannten Kombinationen offenbart anzusehen, sondern sind auch in anderen technisch sinnhaften Kombinationen und Ausführungsformen vom Offenbarungsgehalt umfasst.

Im Hinblick auf eine einfache Betätigung weist die Laderaumabdeckung ein Griffelement auf, mit dem ein Nutzer die Laderaumabdeckung zwischen einer Offenstellung und einer Abdeckstellung in Horizontalrichtung verstellen kann. Das Griffelement kann als ein separates Bauteil, zum Beispiel aus Kunststoff, an der Konturplatte der Laderaumabdeckung montiert sein. In einer bevorzugten Ausführungsvariante kann das Halteelement oder das Fixierungselement unmittelbar Bestandteil des Griffelementes sein. In diesem Fall wird mittels des Griffelementes nicht nur die Verstellung der Laderaumabdeckung bewirkt, vielmehr wirkt das Griffelement in Doppelfunktion auch als ein Bewegungsanschlag, insbesondere Schwenkanschlag, für den Laderaumboden.

Das an die Konturplatte anschließende Flächengebilde kann in einer Wickelvorrichtung mit Wickelwelle aufwickelbar sein. Die Wickelwelle kann in Richtung aufgewickelten Zustand federvorgespannt sein. In diesem Fall kann die Laderaumabdeckung entlang von Führungsschienen von einer Offenstellung (d.h. vom aufgewickelten Zustand) in Richtung Fahrzeugheck bis in eine Abdeckstellung (d.h. in den abgewickelten Zustand) verstellt werden, und zwar unter Aufbau einer von der Wickelwelle erzeugten Rückstellkraft. Die Laderaumabdeckung kann dabei vom Nutzer in einer Zwischenstellung positioniert werden, die sich zwischen der Offenstellung und der Abdeckstellung befindet. In der Zwischenstellung kann die Laderaumabdeckung als Bewegungsanschlag für den Ladeboden wirken. Zur Realisierung der Zwischenstellung kann in der Führungsschiene eine Anschlagkante ausgebildet sein, gegen die die Konturplatte mit der von der Wickelwelle erzeugten Federvorspannung in Anlage bringbar ist.

In einer technischen Umsetzung kann das Griffelement als ein separates Bauteil an der Konturplatte montiert sein. Das Griffelement kann aus einer Oberschale und einer Unterschale aufgebaut sein, die bevorzugt Kunststoffspritzgießteile sind. Die Oberschale und die Unterschale des Griffelementes sind jeweils auf der Oberseite und der Unterseite der Konturplatte angeordnet und fassen einen Öffnungsrand einer in der Konturplatte ausgebildeten Grifföffnung ein. Das erfindungsgemäße Halteelement oder das Fixierungselement kann an der Unterschale ausgebildet sein. In diesem Fall kann die Unterschale in der Fahrzeuglängsrichtung oder in der Fahrzeugquerrichtung mit einem Montageabschnitt verlängert sein, an dem das Halteelement oder das Fixierungselement ausgebildet ist.

Weitere Einzelheiten und Vorteile sollen nun anhand der folgenden Beispiele und optionalen Ausführungsformen mit Bezug auf die Figuren näher erläutert werden.

Es zeigen:
- Figur 1A:: eine schematische Ansicht einer Seitenwand eines Kofferraums eines Fahrzeugs mit einer Laderaumabdeckungsanordnung gemäß einer Ausführungsform der Erfindung,
- Figur 1B:: eine Ausschnittvergrößerung der Figur 1A mit einer Laderaumabdeckungsanordnung in einer schematischen Ansicht, und
- Figuren 2 und 3:: jeweils eine Laderaumabdeckungsanordnung gemäß anderen optionalen Ausführungsformen in schematischer Ansicht.
- Figuren 4, 5 und 6:: Ansichten eines weiteren Ausführungsbeispiels.

In den folgenden Figuren werden gleiche oder ähnliche Elemente in den verschiedenen Ausführungsformen bzw. Figuren der Einfachheit halber mit gleichen Bezugszeichen bezeichnet. Bezugszeichen mit ' bzw. " bezeichnen dasselbe Element in einer anderen Stellung. Bspw. bezeichnet 14' die waagerechte Anordnung der Konturplatte 14 und 14 die laderaumseitig geneigte Stellung der Konturplatte 14.

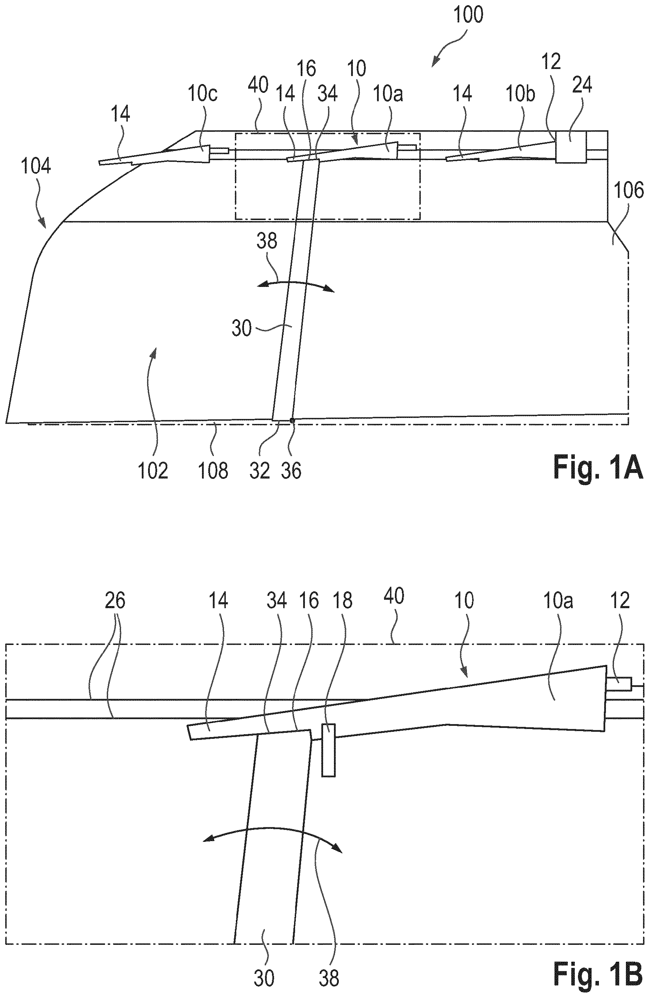

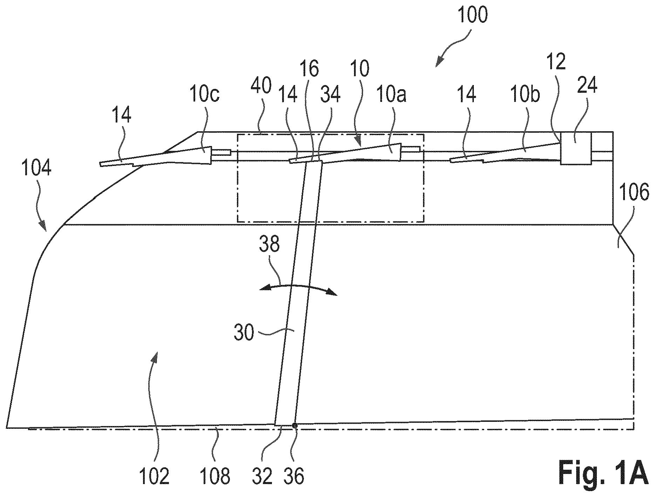

Figur 1A zeigt eine Seitenwand 106, insbesondere die Innenverkleidung, eines Laderaums 102 eines Fahrzeugs 100, optional eines Personenkraftfahrzeugs, in einer schematischen Ansicht. Figur 1B zeigt ferner eine Vergrößerung des Bereichs 40 aus Figur 1A.

Figuren 1A und 1B kann entnommen werden, dass in einem oberen Bereich der Seitenwand 106 eine Laderaumabdeckungsanordnung 10 angeordnet ist. Diese weist eine Laderaumabdeckung 10a-c mit einem Flächengebilde 12 auf, die in einem aufgespannten Zustand eine vorzugsweise blickundurchlässige Ablage und/oder eine Sicherung für im Laderaum 102 befindliche Gegenstände bildet. Das Flächengebilde 12 ist auf einer Wickelwelle 24 auf- und abrollbar angeordnet und kann entweder elektrisch oder durch händische Betätigung einer Konturplatte 14 entlang einer Schiene 26 in Richtung des Hecks 104 des Fahrzeugs 100 abgerollt und wieder aufgerollt werden. Insbesondere bei händischer Betätigung der Konturplatte 14 kann diese als Auszugsleiste fungierten oder kann als Auszugsleiste ausgebildet sein. Das Flächengebilde 12 liegt im teilweise oder vollständig abgerollten Zustand im Wesentlichen parallel zu dem Boden 108 des Laderaums 102 und damit auch im Wesentlichen parallel zu Boden und Dachhimmel des Fahrzeugs 100 vor. Das Flächengebilde 12 kann auch anderweitig, bspw. über eine Lamellenstruktur, realisiert werden, wobei in Art einer Ziehharmonikafaltung miteinander beweglich verbundene Platten der Lammellenstruktur auseinandergezogen und zusammengeschoben werden können.

Figur 1A zeigt dabei die Laderaumabdeckung 10a-c in drei verschiedenen Stadien des Auf- bzw. Abrollvorgangs; zum einen die vollständig aufgerollte Laderaumabdeckung 10b, wobei die Konturplatte 14 angrenzend an der Wickelwelle 24 vorliegt und das Flächengebilde 12 im Wesentlichen vollständig aufgerollt ist, und die vollständig abgerollte Laderaumabdeckung 10c.

Bei letzterer ist die Konturplatte 14 in der Nähe des Hecks 104 des Fahrzeugs 100 angeordnet und überdeckt den Laderaum 102 des Fahrzeugs 100 im Wesentlichen vollständig.

Darüber hinaus wird in der Figur 1A, und insbesondere in der Figur 1B, eine mittlere Position gezeigt, in der die Laderaumabdeckung 10a in Eingriff mit der zweiten Kante 34 eines am Boden 108 des Fahrzeugs 100 angeordneten Ladebodens 30 in dessen geöffneter Position steht, in welcher ein Benutzer ohne weiteres an den Inhalt des unter dem Ladeboden 30 befindlichen Stauraums gelangen und diesen ggf. herausnehmen kann. Der Ladeboden 30 kann dabei entlang einer am Boden 108 angeordneten Drehachse 36 entlang einer Bewegungsrichtung 38 des Ladebodens 30 auf- bzw. zugeklappt werden. Der nicht gezeigte Handgriff zum Auf- bzw. Zuklappen des Ladebodens 30 ist dabei in der Nähe der zweiten Kante 34 und damit, in der geschlossenen Position des Ladebodens 30, in der Nähe des Hecks 104 des Fahrzeugs 100 angeordnet. Durch Schwenken der zweiten Kante 34 in Richtung der Laderaumabdeckung 10a und ggf. weiter, in einer dem Heck 104 entgegengesetzten Richtung wird der Ladeboden 30 in seine geöffnete Position verbracht, wobei die zweite Kante 34 an der gezeigten Mittelstellung der Laderaumabdeckung 10a in Kontakt mit einem als Fixierungselement 18 ausgebildeten Halteelement gerät, welches unterseitig bzw. ladebodenseitig an der Konturplatte 14 angeordnet ist und ein lösbares Befestigen des Ladebodens 30 an der Laderaumabdeckung 10a ermöglicht, um den Ladeboden 30 in der geöffneten Position zu halten. Die Schiene 26 kann dabei in der entsprechenden Position einen Rastpunkt (nicht gezeigt) aufweisen, die es dem Benutzer, ggf. haptisch, erlaubt zu erkennen, in welcher Position der Ladeboden 30 mit der Halterung in Eingriff gebracht werden kann. Alternativ kann die Laderaumabdeckung 10a-c frei bewegt werden bis ein Eingriff des Halteelements derart an dem Ladeboden 30 in seiner geöffneten Position erfolgt, dass Laderaumabdeckung 10a-c und/oder Ladeboden 30 in ihrer jeweiligen Position verbleiben.

Das Halteelement ist, wie aus Figur 1B ersichtlich, durch eine laderaumseitig angeordnete Oberfläche 16 der Konturplatte 14 gebildet und außerdem als Fixierungselement 18 ausgestaltet. Die Oberfläche 16 der Konturplatte 14 ist dabei insbesondere als erste Gleitfläche ausgebildet, entlang der die als zweite Gleitfläche ausgebildete zweite Kante 34 des Ladebodens 30 bis zu dem Fixierungselement 18 bewegt werden kann. Die erste und zweite Gleitfläche sind dabei bspw. aus einem glatten Metall gebildet. Der Ladeboden 30, insbesondere die zweite Kante 34, schlägt an die laderaumseitig angeordnete Oberfläche 16 der Konturplatte 14 formschlüssig an. Die zwischen den beiden Gleitflächen wirkende Kraft kann dabei so groß sein, dass ein Bewegen des Ladebodens 30 relativ zur Laderaumabdeckung 10a (bzw. ein Bewegen der Laderaumabdeckung 10a bzgl. des Ladebodens 30) nur durch äußere Krafteinwirkung, insbesondere durch den Benutzer, ermöglicht werden kann. Auf diese Weise kann somit der Ladeboden in der geöffneten Position lösbar fixiert bzw. befestigt werden. Das in Figur 1B weiter gezeigte optionale Fixierungselement 18 kann ferner ein (bspw. stabförmiges Metall-) Element sein, das an der Konturplatte 14 ladebodenseitig starr angebracht ist, so dass eine weitere unbeabsichtigte Bewegung des Ladebodens 30 in der dem Heck 104 entgegengesetzten Richtung, über das Fixierungselement 18 hinaus, unterbunden wird.

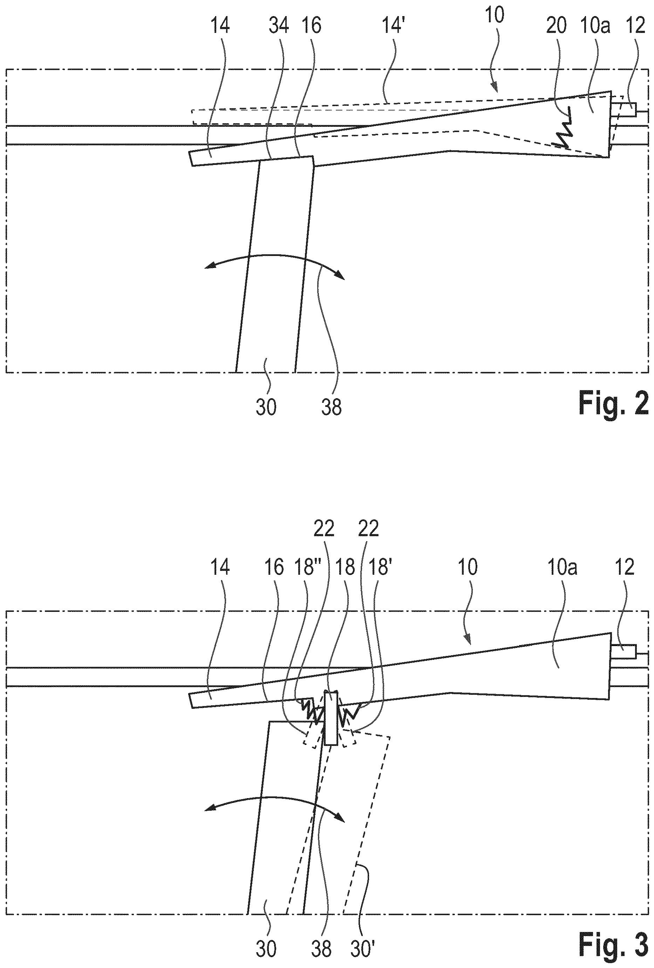

Figur 2 zeigt eine Laderaumabdeckungsanordnung 10 gemäß einer anderen optionalen Ausführungsform. Figur 2 zeigt ferner einen dem Bereich 40 aus Figur 1A entsprechenden Bereich. Die Konturplatte 14 ist hierbei an der Laderaumabdeckung 10a-c derart beweglich gelagert, dass ein dem Flächengebilde 12 entgegengesetztes Ende der Konturplatte 14 laderaumseitig entlang einer an einem Ende der Konturplatte 14, angrenzend an das Flächengebilde 12, ausgebildeten Drehachse gedreht werden kann. Weiterhin ist ein erstes federartiges Element 20 derartig an der Konturplatte 14 angeordnet, dass die Laderaumabdeckung 10a ausgehend von einer im Wesentlichen waagrechten Anordnung der Laderaumabdeckung laderaumseitig gedrückt wird. Insbesondere wird durch das federartige Element 20 eine Änderung einer im Wesentlichen waagerechten Stellung der Konturplatte 14' in eine geneigte Stellung der Konturplatte 14 bewirkt. Dadurch wird die zwischen den als Gleitflächen ausgebildeten Oberfläche 16 der Konturplatte 14 und zweiten Kante 34 des Ladebodens 30 vorliegende Kraft, insbesondere Gleitreibungs- und Haftreibungskraft, weiter erhöht. Hierdurch kann eine zuverlässigere Fixierung des Ladebodens 30 in der geöffneten Position erreicht werden, wobei auf den Einsatz eines zusätzlichen Fixierungselements 18 verzichtet werden kann.

Figur 3 zeigt eine Laderaumabdeckungsanordnung 10 gemäß einer weiteren optionalen Ausführungsform. Figur 3 zeigt ferner einen dem Bereich 40 aus Figur 1A entsprechenden Bereich. Wie hierin gezeigt wirkt auch hier zwischen den als Gleitflächen ausgebildeten Oberfläche 16 der Konturplatte 14 und zweiten Kante 34 des Ladebodens 30 eine Kraft, wodurch der Ladeboden 30 an der Laderaumabdeckung 10a befestigt werden kann. Dieser Effekt ist jedoch in der gezeigten Ausführungsform optional, da die Befestigung des Ladebodens 30 in der geöffneten Position im Wesentlichen durch ein unterseitig der Konturplatte 14 angeordnetes Fixierungselement 18 erfolgt, das durch eine durch ein zweites federartiges Element 22 vermittelte Kraft in Richtung der Laderaumabdeckung 10a-c gedrückt wird. Dies wird in Figur 3 schematisch durch die verschiedenen Positionen des Ladebodens 30, 30' in der Bewegungsrichtung 38 verdeutlicht. Mithin muss der Benutzer sowohl für ein Befestigen des Ladebodens 30 in der geöffneten Position als auch für Schließen des Ladebodens 30 ausgehend von der geöffneten Position eine entgegen dem zweiten federartigen Element 22 gerichtete Kraft ausüben. Wie aus Figur 3 ersichtlich ist das Fixierungselement 18 derartig laderaumseitig an der Konturplatte 14 angebracht, dass es entgegen einer durch zwei zweite federartige Elemente 22 vermittelte Kraft sowohl in Richtung des Hecks 104 des Fahrzeugs 100 als auch in die entgegengesetzte Richtung bewegt werden kann, wobei die jeweiligen Auslenkpositionen des Fixierungselement 18 als Fixierungselement 18' bzw. Fixierungselement 18" gezeigt werden. Wie vorstehend erwähnt, müssen hierbei weder die Oberfläche 16 der Konturplatte 14 noch die zweite Kante 34 des Ladebodens 30 als Gleitfläche ausgebildet sein. Dies hat weiterhin den Vorteil, dass größere Toleranzen bei der Herstellung eingehalten werden können. Anstelle des Fixierungselements 18 und des zweiten federartigen Elements 22 kann auch ein Fixierungselement 18 aus einem elastischen Material, bspw. Gummi, verwendet werden.

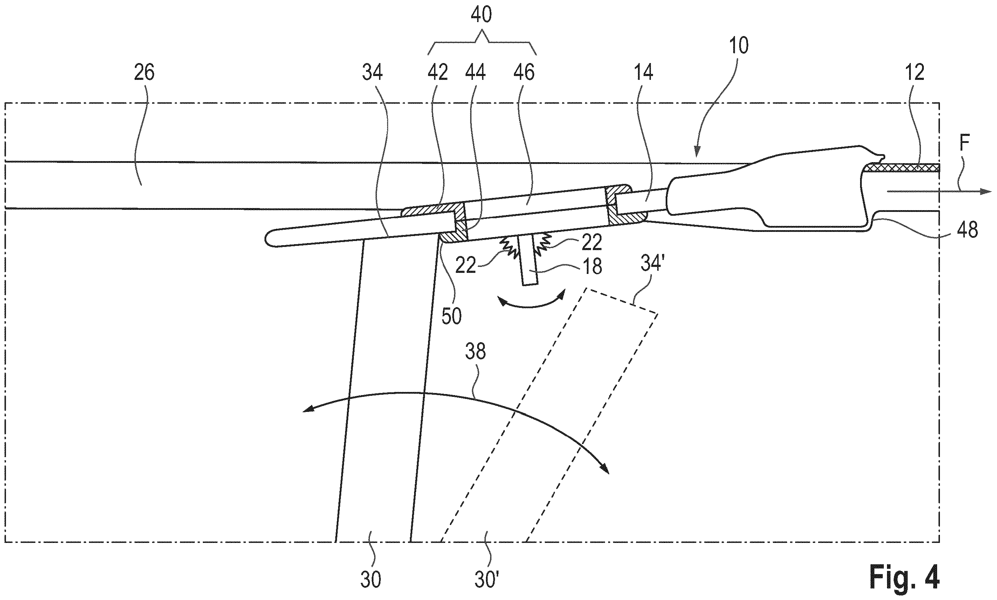

In den Figuren 4, 5 und 6 ist ein weiteres Ausführungsbeispiel der Erfindung gezeigt. Demnach ist in der Konturplatte 14 in Fahrzeugquerrichtung y betrachtet mittig eine Grifföffnung 46 ausgebildet. Der Öffnungsrand der Grifföffnung 46 der Konturplatte 14 ist mittels einer Kunststoff-Oberschale 42 und einer Kunststoff-Unterschale 44 eingefasst. Die Kunststoff-Oberschale 42 und die Kunststoff-Unterschale 44 bilden ein Griffelement 40, mit dessen Hilfe ein Nutzer den Laderaumabdeckung 10a-c manuell verstellen kann.

Wie bereits erwähnt, ist das Flächengebilde 12 der Laderaumabdeckung 10a-c auf einer Wickelvorrichtung mit Wickelwelle 24 aufwickelbar. Die Wickelwelle 24 ist in Richtung aufgewickelten Zustand federvorgespannt. Daher kann die Laderaumabdeckung 10 von einer Offenstellung (das heißt vom aufgewickelten Zustand) in Richtung Fahrzeugheck bis in eine Abdeckstellung (das heißt abgewickelter Zustand) entlang der Führungsschienen 26 verstellt werden, und zwar unter Aufbau einer von der Wickelwelle 24 erzeugten Rückstellkraft F (Figur 4).

In der Figur 4 ist die Laderaumabdeckung 10 in einer zwischen der Offenstellung und der Abdeckstellung befindlichen Zwischenstellung positioniert. In der Zwischenstellung kann die Laderaumabdeckung 10 als ein Schwenkanschlag für den schwenkbaren Ladeboden 30 wirken. Zur Realisierung dieser Zwischenstellung weist die Führungsschiene 26 gemäß der Figur 4 eine Anschlagkante 48 auf, gegen die die Konturplatte 14 bis der von der Wickelwelle erzeugten Federvorspannung gebracht ist.

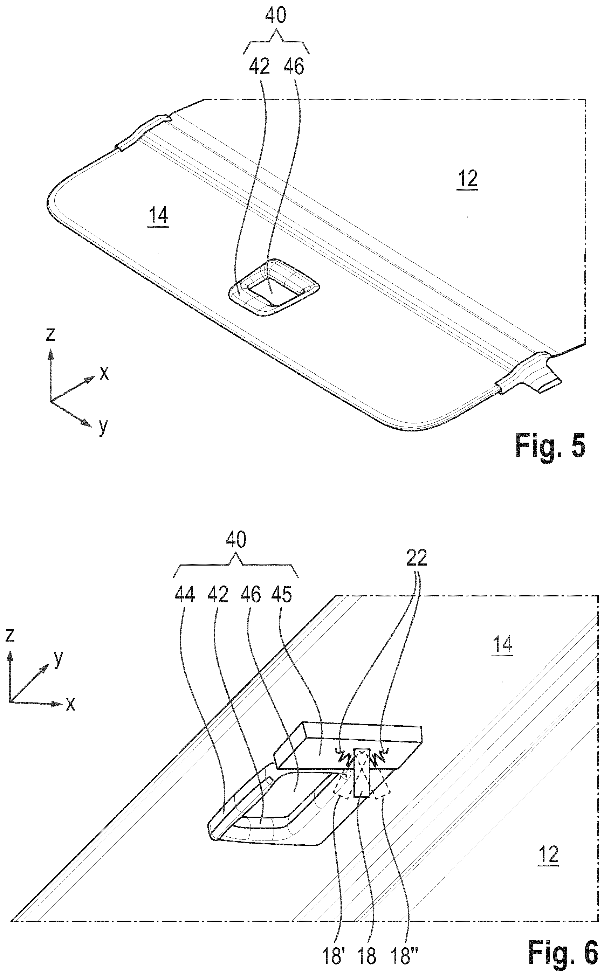

In der Figur 6 kann beispielhaft eine Vorderkante 50 der Unterschale 44 des Griffelementes 40 als Schwenkanschlag für den schwenkbaren Ladeboden 30 wirken. Abhängig von Bauteil- und/oder Fertigungstoleranzen kann jedoch gegebenenfalls die Vorderkante 50 der Unterschale 44 keine ausreichende Überdeckung mit der zweiten Kante 34 des schwenkbaren Ladebodens 30 bieten. Vor diesem Hintergrund ist die Unterschale 44 in der Fahrzeugquerrichtung y mit einem Montageabschnitt 45 (Figur 6) verlängert, an dem das elastisch nachgiebige Fixierungselement 18, 18' 18" ausgebildet ist. Das sowohl nach fahrzeugvorne als auch nach fahrzeughinten elastisch nachgiebige Fixierungselement 18, 18', 18" kann ein Überdrücken des schwenkbaren Ladebodens 30 über das Halteelement/Fixierungselement 18 hinaus ermöglichen, wie es in der Figur 4 angedeutet ist. Das Fixierungselement 18, 18', 18" kann dabei in beliebiger Weise elastisch nachgiebig am Montageabschnitt 45 der Unterschale 44 des Griffelementes 40 angeordnet werden.

### Bezugszeichenliste

- 10: Laderaumabdeckungsanordnung
- 10a-c: Laderaumabdeckung
- 12: Flächengebilde
- 14, 14': Konturplatte
- 16: Oberfläche
- 18, 18', 18": Fixierungselement
- 20: erstes federartiges Element
- 22: zweites federartiges Element
- 24: Wickelwelle
- 26: Schiene
- 30, 30': Ladeboden
- 32: erste Kante
- 34, 34': zweite Kante
- 36: Drehachse
- 38: Bewegungsrichtung
- 40: Griffelement
- 42: Oberschale
- 44: Unterschale
- 45: Montageabschnitt
- 46: Grifföffnung
- 48: Schienen-Anschlagkante
- 50: Vorderkante der Unterschale
- 100: Fahrzeug
- 102: Laderaum
- 104: Heck
- 106: Seitenwand
- 108: Boden

## Patentansprüche

1. Laderaumabdeckungsanordnung (10) für ein Fahrzeug (100), aufweisend eine Laderaumabdeckung (10a-c), wobei die Laderaumabdeckung (10a-c) ein laderaumseitig angeordnetes Halteelement zur Befestigung eines Ladebodens (30) des Fahrzeugs (100) aufweist, wobei die Laderaumabdeckung (10a-c) dazu ausgelegt ist, mittels des Halteelements den Ladeboden (30) an der Laderaumabdeckung (10a-c) lösbar zu befestigen, um den Ladeboden (30) in einer geöffneten Position zu halten, wobei die Laderaumabdeckung ein durch eine Konturplatte (14) begrenztes Flächengebilde (12) aufweist, wobei das Halteelement durch eine laderaumseitig angeordnete Oberfläche (16) der Konturplatte (14) oder des Flächengebildes (12) gebildet ist und/oder als Fixierungselement (18, 18', 18") ausgestaltet ist, **dadurch gekennzeichnet, dass** die Konturplatte (14, 14') an der Laderaumabdeckungsanordnung (10a-c) beweglich gelagert ist.

2. Laderaumabdeckungsanordnung (10) nach Anspruch 1, wobei die Laderaumabdeckungsanordnung (10) derart ausgebildet ist, dass zur Befestigung des Ladebodens (30) mittels des Halteelements der Ladeboden (30) an die laderaumseitig angeordnete Oberfläche (16) der Konturplatte (14) formschlüssig anschlägt.

3. Laderaumabdeckungsanordnung (10) nach Anspruch 1, wobei die Konturplatte (14, 14') entgegen einer durch ein erstes federartiges Element (20) vermittelten Kraft in eine dem Laderaum (102) entgegengesetzte Richtung bewegbar ist.

4. Laderaumabdeckungsanordnung (10) nach einem der Ansprüche 1 bis 3, wobei die laderaumseitig angeordnete Oberfläche (16) der Konturplatte (14) zumindest abschnittsweise als eine erste Gleitfläche ausgebildet ist.

5. Laderaumabdeckungsanordnung (10) nach Anspruch 1, wobei das Fixierungselement (18, 18', 18") an der Laderaumabdeckungsanordnung (10a-c), vorzugsweise an der Konturplatte (14), schwenkbar gelagert ist.

6. Laderaumabdeckungsanordnung (10) nach Anspruch 5, wobei das Fixierungselement (18, 18', 18") entgegen einer durch ein zweites federartiges Element (22) vermittelten Kraft in Richtung der Laderaumabdeckungsanordnung (10a-c) bewegt werden kann.

7. Laderaumabdeckungsanordnung nach einem der vorhergehenden Ansprüche, wobei die Laderaumabdeckung (10a-c) ein Griffelement (40) aufweist, mittels dem die Laderaumabdeckung (10a-c) verstellbar ist, und/oder dass insbesondere das Griffelement (40) als ein separates Bauteil an der Konturplatte (14) montiert ist, und/oder dass insbesondere das Halteelement oder das Fixierungselement (18, 18', 18") ein Bestandteil des Griffelements (40) ist, so dass bevorzugt mittels des Griffelements (40) nicht nur eine Verstellung der Laderaumabdeckung (10a-c) bewirkt wird, sondern in Doppelfunktion das Griffelement (40) auch als ein Bewegungsanschlag, insbesondere Schwenkanschlag, für den Laderaumboden (30) wirkt.

8. Laderaumabdeckungsanordnung nach Anspruch 7, **dadurch gekennzeichnet, dass** das Griffelement (40) aus einer Oberschale (42) und einer Unterschale (44) aufgebaut ist, die jeweils auf der Oberseite und der Unterseite der Konturplatte (14) angeordnet sind, und dass insbesondere die Ober- und Unterschalen (42, 44) einen Öffnungsrand einer in der Konturplatte (14) ausgebildeten Grifföffnung (46) einfassen, und dass insbesondere das Halteelement oder das Fixierungselement (18, 18', 18") an der Unterschale (44) ausgebildet ist.

9. Laderaumabdeckungsanordnung nach Anspruch 8, wobei die Unterschale (44) in der Fahrzeuglängsrichtung (x) oder in der Fahrzeugquerrichtung (y) mit einem Montageabschnitt (45) verlängert ist, an dem das Halteelement oder das Fixierungselement (18, 18', 18") ausgebildet ist.

10. Laderaum (102) eines Fahrzeugs (100), mit einer Laderaumabdeckungsanordnung (10) nach einem der Ansprüche 1 - 9, wobei die Laderaumabdeckung (10a-c) an einer Oberseite des Laderaums (102) angeordnet ist und einem an einem Boden (108) des Laderaums (102) angeordneten Ladeboden (30), wobei eine erste Kante (32) des Ladebodens (30) um eine an dem Boden (108) angeordnete Drehachse (36) drehbar gelagert ist und eine zweite Kante (34) des Ladebodens (30) in Richtung der Laderaumabdeckungsanordnung (10a-c) schwenkbar ist, um den Ladeboden (30) in eine geöffnete Position zu verbringen.

11. Fahrzeug (100), insbesondere Kraftfahrzeug, mit einer Laderaumabdeckungsanordnung (10a-c) nach einem der Ansprüche 1 bis 9 oder mit einem Laderaum (102) nach Anspruch 10.

## Claims

1. Loading-space-cover arrangement (10) for a vehicle (100), having a loading-space cover (10a-c), wherein the loading-space cover (10a-c) has a holding element which is arranged on the loading-space side and which serves for fastening of a loading floor (30) of the vehicle (100), wherein the loading-space cover (10a-c) is configured to releasably fasten the loading floor (30) on the loading-space cover (10a-c) by means of the holding element in order to hold the loading floor (30) in an open position, wherein the loading-space cover has a sheet-like structure (12) which is delimited by a contour plate (14), wherein the holding element is formed by a surface (16), arranged on the loading-space side, of the contour plate (14) or of the sheet-like structure (12) and/or is designed as a fixing element (18, 18', 18''), **characterized in that** the contour plate (14, 14') is mounted movably on the loading-space-cover arrangement (10a-c).

2. Loading-space-cover arrangement (10) according to Claim 1, wherein the loading-space-cover arrangement (10) is designed in such a way that, for fastening the loading floor (30) by means of the holding element, the loading floor (30) abuts in a form-fitting manner against the surface (16) of the contour plate (14) arranged on the loading-space side.

3. Loading-space-cover arrangement (10) according to Claim 1, wherein the contour plate (14, 14') is movable in a direction opposite to the loading space (102) counter to a force imparted by a first spring-like element (20).

4. Loading-space-cover arrangement (10) according to one of Claims 1 to 3, wherein the surface (16) of the contour plate (14) arranged on the loading-space side is formed at least sectionally as a first sliding surface.

5. Loading-space-cover arrangement (10) according to Claim 1, wherein the fixing element (18, 18', 18'') is mounted pivotably on the loading-space-cover arrangement (10a-c), preferably on the contour plate (14).

6. Loading-space-cover arrangement (10) according to Claim 5, wherein the fixing element (18, 18', 18'') can be moved in the direction of the loading-space-cover arrangement (10a-c) counter to a force imparted by a second spring-like element (22).

7. Loading-space-cover arrangement according to one of the preceding claims, wherein the loading-space cover (10a-c) has a grip element (40) by means of which the loading-space cover (10a-c) is adjustable, and/or wherein in particular the grip element (40) is mounted as a separate component on the contour plate (14), and/or wherein in particular the holding element or the fixing element (18, 18', 18'') is a constituent part of the grip element (40), so that preferably, by means of the grip element (40), not only an adjustment of the loading-space cover (10a-c) is effected but, with a double function, the grip element (40) also acts as a movement stop, in particular pivoting stop, for the loading-space floor (30).

8. Loading-space-cover arrangement according to Claim 7, **characterized in that** the grip element (40) is constructed from a top shell (42) and a bottom shell (44), which are respectively arranged on the top side and the bottom side of the contour plate (14), and **in that** in particular the top and bottom shells (42, 44) surround an opening edge of a grip opening (46) formed in the contour plate (14), and **in that** in particular the holding element or the fixing element (18, 18', 18'') is formed on the bottom shell (44).

9. Loading-space-cover arrangement according to Claim 8, wherein the bottom shell (44) is extended in the vehicle longitudinal direction (x) or in the vehicle transverse direction (y) by a mounting section (45) on which the holding element or the fixing element (18, 18', 18'') is formed.

10. Loading space (102) of a vehicle (100), having a loading-space-cover arrangement (10) according to one of Claims 1-9, wherein the loading-space cover (10a-c) is arranged on a top side of the loading space (102) and on a loading floor (30) arranged on a floor (108) of the loading space (102), wherein a first edge (32) of the loading floor (30) is mounted so as to be rotatable about an axis of rotation (36) positioned on the floor (108) and a second edge (34) of the loading floor (30) is pivotable in the direction of the loading-space-cover arrangement (10a-c) in order for the loading floor (30) to be brought into an open position.

11. Vehicle (100), in particular motor vehicle, having a loading-space-cover arrangement (10a-c) according to one of Claims 1 to 9 or having a loading space (102) according to Claim 10.

## Revendications

1. Agencement de recouvrement de compartiment à bagages (10) destiné à un véhicule (100), présentant un recouvrement de compartiment à bagages (10a-c), dans lequel le recouvrement de compartiment à bagages (10a-c) présente un élément de maintien disposé côté compartiment à bagages pour fixer un plancher de chargement (30) du véhicule (100), dans lequel le recouvrement de compartiment à bagages (10a-c) est conçu pour fixer de manière amovible le plancher de chargement (30) au recouvrement de compartiment à bagages (10a-c) au moyen de l'élément de maintien afin de maintenir le plancher de chargement (30) dans une position ouverte, dans lequel le recouvrement de compartiment à bagages présente une structure plate (12) limitée par une plaque profilée (14), dans lequel l'élément de maintien est formé par une surface (16), disposée côté compartiment de bagages, de la plaque profilée (14) ou de la structure plate (12) et/ou est configuré sous forme d'élément de fixation (18, 18', 18''), **caractérisé en ce que** la plaque profilée (14, 14') est montée mobile au niveau de l'agencement de recouvrement de compartiment à bagages (10a-c).

2. Agencement de recouvrement de compartiment à bagages (10) selon la revendication 1, dans lequel l'agencement de recouvrement de compartiment à bagages (10) est réalisé de telle sorte que pour fixer le plancher de chargement (30) au moyen de l'élément de maintien, le plancher de chargement (30) vient en butée par complémentarité de forme (14) contre la surface (16), disposée côté compartiment à bagages, de la plaque profilée.

3. Agencement de recouvrement de compartiment à bagages (10) selon la revendication 1, dans lequel la plaque profilée (14, 14') peut être déplacée contre une force transmise par un premier élément (20) de type ressort dans une direction opposée au compartiment à bagages (102).

4. Agencement de recouvrement de compartiment à bagages (10) selon l'une quelconque des revendications 1 à 3, dans lequel la surface (16), disposée côté compartiment à bagages, de la plaque profilée (14) est réalisée au moins par endroits comme une première surface de glissement.

5. Agencement de recouvrement de compartiment à bagages (10) selon la revendication 1, dans lequel l'élément de fixation (18, 18', 18'') est monté pivotant au niveau de l'agencement de recouvrement de compartiment à bagages (10a-c), de préférence au niveau de la plaque profilée (14).

6. Agencement de recouvrement de compartiment à bagages (10) selon la revendication 5, dans lequel l'élément de fixation (18, 18', 18'') peut être déplacé contre une force transmise par un deuxième élément (22) de type ressort en direction de l'agencement de recouvrement de compartiment à bagages (10a-c).

7. Agencement de recouvrement de compartiment à bagages selon l'une quelconque des revendications précédentes, dans lequel le recouvrement de compartiment à bagages (10a-c) présente un élément de poignée (40) qui permet de régler le recouvrement de compartiment à bagages (10a-c), et/ou dans lequel en particulier l'élément de poignée (40) est monté sous forme de composant séparé au niveau de la plaque profilée (14), et/ou dans lequel en particulier l'élément de maintien ou l'élément de fixation (18, 18', 18") fait partie de l'élément de poignée (40) de sorte que de préférence au moyen de l'élément de poignée (40) non seulement un réglage du recouvrement de compartiment à bagages (10a-c) est provoqué mais dans une double fonction l'élément de poignée (40) agit aussi comme une butée de mouvement, en particulier une butée de pivotement, pour le plancher de compartiment à bagages (30).

8. Agencement de recouvrement de compartiment à bagages selon la revendication 7, **caractérisé en ce que** l'élément de poignée (40) est composé d'une coque supérieure (42) et d'une coque inférieure (44) qui sont agencées respectivement sur la face supérieure et la face inférieure de la plaque profilée (14), et **en ce qu'**en particulier les coques supérieure et inférieure (42, 44) entourent un bord d'ouverture d'une ouverture de poignée (46) réalisée dans la plaque profilée (14), et **en ce qu'**en particulier l'élément de maintien ou l'élément de fixation (18, 18', 18'') est réalisé au niveau de la coque inférieure (44).

9. Agencement de recouvrement de compartiment à bagages selon la revendication 8, dans lequel la coque inférieure (44) est prolongée dans la direction longitudinale de véhicule (x) ou dans la direction transversale de véhicule (y) par une section de montage (45) au niveau de laquelle est réalisé l'élément de maintien ou l'élément de fixation (18, 18' 18'').

10. Compartiment à bagages (102) d'un véhicule (100), comprenant un agencement de recouvrement de compartiment à bagages (10) selon l'une quelconque des revendications 1 à 9, dans lequel le recouvrement de compartiment à bagages (10a-c) est disposé sur une face supérieure du compartiment à bagages (102), et un plancher de chargement (30) disposé sur un plancher (108) du compartiment à bagages (102), dans lequel une première arête (32) du plancher de chargement (30) est montée rotative autour d'un axe de rotation (36) disposé sur le plancher (108), et une deuxième arête (34) du plancher de chargement (30) peut pivoter en direction de l'agencement de recouvrement de compartiment à bagages (10a-c) pour amener le plancher de chargement (30) dans une position ouverte.

11. Véhicule (100), en particulier véhicule automobile, comprenant un agencement de recouvrement de compartiment à bagages (10a-c) selon l'une quelconque des revendications 1 à 9 ou un compartiment à bagages (102) selon la revendication 10.
